(19) Europäisches Patentamt
European Patent Office
Office européen des brevets

(11) Veröffentlichungsnummer: **0 267 460 B1**

(12) **EUROPÄISCHE PATENTSCHRIFT**

(45) Veröffentlichungstag der Patentschrift: **30.01.91**

(51) Int. Cl.$^5$: **C 08 F 220/22,** B 29 D 11/00

(21) Anmeldenummer: **87115304.5**

(22) Anmeldetag: **20.10.87**

# (54) Transparentes Polymermaterial.

(30) Priorität: **25.10.86 DE 3636400**

(43) Veröffentlichungstag der Anmeldung:
**18.05.88 Patentblatt 88/20**

(45) Bekanntmachung des Hinweises auf die Patenterteilung:
**30.01.91 Patentblatt 91/05**

(84) Benannte Vertragsstaaten:
**BE DE FR GB IT**

(56) Entgegenhaltungen:
**GB-A- 826 831**
**GB-A-2 089 523**
**DATABASE CHEMICAL ABSTRACTS, 1985, Zusammenfassung Nr. 103(20):161473s; & JP-A-60 112 408**
**CHEMICAL ABSTRACTS SERVICE REGISTRY HANDBOOK, Nummer Sektion, 1985, Zusatz, Teil III, Seite 3753RN**
**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Wieners, Gerhard, Dr.**
**Unterweg 17**
**D-6000 Frankfurt am Main (DE)**
Erfinder: **Heumüller, Rudolf, Dr.**
**Sodener Weg 1**
**D-6232 Bad Soden am Taunus (DE)**
Erfinder: **Coutandin, Jochen, Dr.**
**Friedenstrasse 3**
**D-6551 Bretzenheim (DE)**
Erfinder: **Groh, Werner, Dr.**
**Geisenheimer Strasse 93**
**D-6000 Frankfurt am Main 71 (DE)**
Erfinder: **Herbrechtsmeier, Peter, Dr.**
**Friedrich-Stolze-Strasse 10**
**D-6240 Königstein/Taunus (DE)**

(56) Entgegenhaltungen:
**CHEMICAL PATENTS INDEX, BASIC ABSTRACTS JOURNAL, Sektion A, Woche 8742, 16-12-1987, AO643, Nr. 87-295938/42, Derwent Publications Ltd , London, GB; & JP-A-62 208 005**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 267 460 B1

**Beschreibung**

Die Erfindung bezieht sich auf ein amorphes halogenhaltiges Polymer welches sich für die Herstellung von Polymer-Gläsern und optischen Artikeln wie Linsen und Lichtwellenleiter für die Übermittlung von Lichtsignalen eignet. Diese Lichtwellenleiter besitzen eine hohe Wärmestandfestigkeit.

Lichtwellenleiter können aus einem Kern und einem Mantel bestehen, wobei das Kernmaterial immer einen höheren Brechungsindex hat als das Mantelmaterial. Kernmaterial und Mantelmaterial eines solchen Lichtwellenleiters sollen so wenig Licht wie möglich absorbieren.

Die bisher für Lichtwellenleiter am häufigsten eingesetzten polymeren Materialien sind Homo- und Copolymere des Methylmethacrylats. Während für den Kern auch halogenhaltige Polymere eingesetzt wurden, wurden für den Mantel bislang ausschließlich fluorhaltige Polymere verwendet, weil sie einen niedrigeren Brechungsindex aufweisen. Zur Verminderung der Lichtabsorption ist auch schon vorgeschlagen worden, die Wasserstoffatome in den Monomeren und Polymeren durch Deuterium zu ersetzen.

Bekannt sind Copolymere von Methylmethacrylat mit einer Verbindung der Formel $CH_2 = CR—(CO—O)_n—ArBr_m$ (R = H, $CH_3$; n = Null, 1, m = 1 bis 5) (vgl. DE—A 2 202 791). Namentlich genannt sind Acrylsäureester und Methacrylsäureester von Mono-, Di-, Tri-, Tetra- und Pentabromphenol. Der Anteil des bromhaltigen Comonomeren beträgt maximal 44 Prozent.

Weiterhin sind bekannt Copolymere aus Trifluormethacrylsäureester und Styrol oder substituierten Styrolen, beispielsweise halogenhaltigem Styrol (vgl. DE—A 3 518 617). Die Copolymeren werden u.a. als Mantelmaterial für optische Fasern verwendet.

Schließlich ist auch ein Lichtwellenleiter beschrieben worden, dessen Kernmaterial durch Blockpolymerisation von u.a. halogenierten Arylmethacrylat, beispielsweise Pentafluorphenyl-methacrylat hergestellt wird (vgl. JP—OS 60—242404). Als Mantelmaterial werden Copolymere von Vinylidenfluorid, Tetrafluorethylen und Hexafluorpropylen eingesetzt.

Ferner sind auch Copolymere von Halogenmethacrylaten mit polyfunktionellen Allylverbindungen bekannt, welche im vernetzten Zustand hergestellt werden (GB 2 089 523). Auf Grund der hohen Glasübergangstemperatur derartiger Poly(meth/2-fluor)acrylate hochchlorierter Phenole müssen hier jedoch vergleichsweise hohe Verarbeitungstemperaturen angewendet werden, was wiederum eine thermische Zersetzung begünstigt.

So sind auch Homo- und Copolymere von Pentachlorphenylacrylaten beschrieben (GB 826,831), jedoch ist nichts über ihre optischen Eigenschaften bekannt. Polymere, welche Einheiten enthalten, die sich von Bromphenylestern und 2-Fluoracrylsäure ableiten werden in der nicht vorveröffentlichten, prioritätsgleichen EP—A—267 459 beschrieben.

Die vorgenannten Polymeren ergeben jedoch für bestimmte Einsatzgebiete keine Lichtwellenleiter mit ausreichender Wärmestandfestigkeit.

Es wurde nun gefunden, daß man ein transparentes Material mit sehr guter Wärmestandfestigkeit und guter Lichtleitfähigkeit erhält, wenn es im wesentlichen aus einem Polymer besteht, welches sich von Chlorphenylfluoracrylate ableitet.

Die Erfindung betrifft somit ein transparentes Material, das im wesentlichen aus einem amorphen, halogenhaltigen Polymer besteht, dadurch gekennzeichnet, daß das Polymer Einheiten enthält, die sich von einem Ester der Formel (I) ableiten,

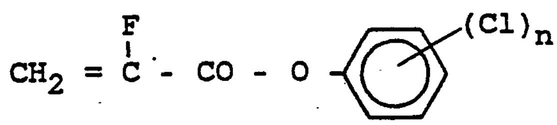
(I)

in der n eine ganze Zahl von 1 bis 5 bedeuten.

Die Erfindung betrifft weiterhin ein Verfahren zu seiner Herstellung.

In der Formel (I) ist n ist vorzugsweise 3, 4 oder 5, insbesondere 5. Beispiele für erfindungsgemäß einzusetzende Verbindungen der Formel (I) sind:

Chlorphenyl-fluoracrylat, Trichlorphenyl-fluoracrylat, Tetrachlorphenyl-fluoracrylat, Pentachlorphenyl-fluoracrylat.

Bevorzugt eingesetzt von diesen Monomeren wird Pentachlorphenyl-fluoracrylat.

Die Monomeren können in bekannter Weise durch Umsetzung von α-Fluoracryloylhalogenid mit einem (Poly) Chlorphenol hergestellt werden.

Weiterhin sind in den erfindungsgemäßen Polymeren Einheiten enthalten, welche sich beispielsweise von den folgenden Monomeren ableiten:

Alkylacrylate, Alkylmethacrylate, Styrol, α-Methylstyrol, Vinylchlorid und andere halogenhaltige Monomere, Maleinsäureanhydrid, Acrylsäure, Acrylnitril.

Bevorzugt sind Methylmethacrylat, Styrol, Hexafluorisopropylmethacrylat, Acrylnitril und Acrylsäure.

Die aus den genannten Monomeren durch radikalische Blockpolymerisation hergestellten Polymeren bestehen zu 40 bis 100 Gew.-%, vorzugsweise 60 bis 100 Gew.-%, aus Einheiten, welche sich von Verbindungen der Formel (I) ableiten. 0 bis 60 Gew.-%, vorzugsweise 0 bis 40 Gew.-%, Einheiten leiten sich von den Monomeren der zweiten Gruppe ab.

Die erfindungsgemäßen Polymeren und Copolymeren weisen Glasübergangstemperaturen von 120° bis 230°C, vorzugsweise 150° bis 210°C, insbesondere 165° bis 210°C auf. Die Polymeren sind transparent und thermoplastisch verarbeitbar und bilden das Material für die Herstellung von Lichtwellenleitern, welche auch aus Kern und Mantel bestehen können. Dabei kann das Polymere für den Mantel der Lichtwellenleiter aus den gleichen Monomeren aufgebaut sein wie das Polymere für den Kern. Der Halogengehalt im Mantelpolymeren muß jedoch so niedrig sein, daß der Brechungsindex des Mantelpolymeren kleiner ist als derjenige des Kernpolymeren.

Die Herstellung von Lichtwellenleitern aus dem erfindungsgemäßen transparenten Material kann nach an sich bekannten Verfahren erfolgen:

1. Extrusion eines mantellosen Lichtwellenleiters mit Hilfe eines Extruders.

2. Coextrusion einer Kern- und Mantelkomponente mit Hilfe eines Extruders und einer Bikomponenten-Spinndüse.

3. Extrusion eines Kerns und anschließende Extrusionsbeschichtung mit einem Mantelpolymeren.

4. Extrusion eines Kerns und anschließende Aufbringung eines Mantelpolymeren in einem Lösungsmittel.

5. Extrusion eines Kerns und anschließende Aufbringung eines Mantelpolymeren in Form einer Dispersion, Trocknen und Sintern der Dispersion bzw. des Dispersionsfilms.

Die aus dem erfindungsgemäßen transparenten Material hergestellten Lichtwellenleiter zeichnen sich durch eine sehr gute Wärmestandfestigkeit aus und können deswegen an Orten mit hoher Wärmebelastung, z.B. in Automobilen, eingesetzt werden.

**Patentansprüche**

1. Amorphes, halogenhaltiges Polymer mit einer Glasübergangstemperatur von 120° bis 230°C, enthaltend Einheiten, die sich von einem Ester der Formel (I) ableiten,

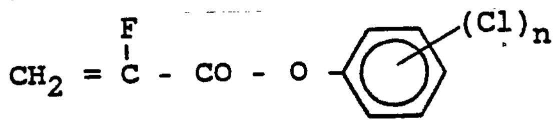 (I)

in der n eine ganze Zahl von 1 bis 5 bedeutet.

2. Polymer nach Anspruch 1, dadurch gekennzeichnet, daß der Ester der Formel (I) Pentachlorphenyl-α-fluoracrylat ist.

3. Polymer nach Anspruch 1, dadurch gekennzeichnet, daß es zu 40 bis 100 Gew.-% aus Einheiten, die sich von einem Ester der Formel (I) ableiten, und zu 0 bis 60 Gew.-% aus Einheiten, die sich von Alkylacrylaten, Alkylmethacrylaten, Styrol, α-Methylstyrol, Vinylchlorid und anderen halogenhaltigen Monomeren, Maleinsäureanhydrid, Acryläsure oder Acrylnitril ableiten, besteht.

4. Verfahren zur Herstellung eines amorphen, halogenhaltigen Polymers durch radikalische Blockpolymerisation, dadurch gekennzeichnet, daß Ester der Formel (I)

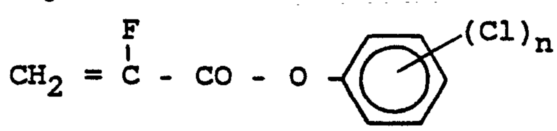 (I)

in der n eine ganze Zahl von 1 bis 5 bedeutet, polymerisiert werden.

5. Verwendung des Polymers gemäß Anspruch 1 zur Herstellung von lichtübertragenden Fasern.

6. Verwendung des Polymers gemäß Anspruch 2 zur Herstellung von lichtübertragenden Fasern.

**Revendications**

1. Polymère halogéné amorphe présentant une température de transition vitreuse de 120 à 230°C, polymère qui contient des motifs dérivant d'un ester répondant à la formule I

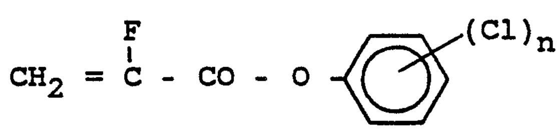 (I)

dans laquelle n désigne un nombre entier de 1 à 5.

2. Polymère selon la revendication 1 caractérisé en ce que l'ester de formule I est l'α-fluoracrylate de pentachlorophényle.

3. Polymère selon la revendication 1 caractérisé en ce qu'il est constitué, pour 40 à 100% en poids, de motifs dérivant d'un ester de formule I, et, pour 0 à 60% en poids, de motifs dérivant d'acrylates d'alkyles, de méthacrylates d'alkyles, du styrène, de l'α-méthyl-styrène, du chlorure de vinyle ou d'autres monomères halogénés, de l'anhydride maléique, de l'acide acrylique ou de l'acrylonitrile.

4. Procédé pour préparer un polymère halogéné amorphe par polymérisation séquencée radicalaire, procédé caractérisé en ce qu'on polymérise un ester répondant à la formule I:

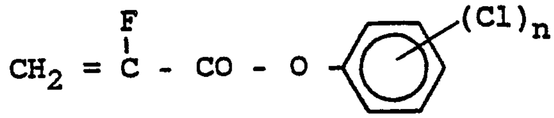

(I)

dans laquelle n désigne un nombre entier de 1 à 5.

5. Application du polymère selon la revendication 1 à la fabrication de fibres optiques.

6. Application du polymère selon la revendication 2 à la fabrication de fibres optiques.

**Claims**

1. An amorphous halogen-containing polymer having a glass transition point of 120° to 230°C, containing units derived from an ester of the formula (I)

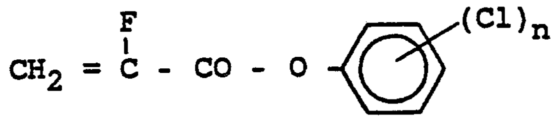

(I)

in which n is an integer from 1 to 5.

2. A polymer as claimed in claim 1, wherein the ester of the formula (I) is pentachlorophenyl α-fluoroacrylate.

3. A polymer as claimed in claim 1, which is composed to the extent of 40 to 100% by weight of units derived from an ester of the formula (I), and to the extent of 0 to 60% by weight of units derived from alkyl acrylates, alkyl methacrylates, styrene, α-methylstyrene, vinyl chloride and other halogen-containing monomers, maleic anhydride, acrylic acid or acrylonitrile.

4. A process for preparing an amorphous halogen-containing polymer by free-radical block polymerization, which comprises polymerizing an ester of the formula (I)

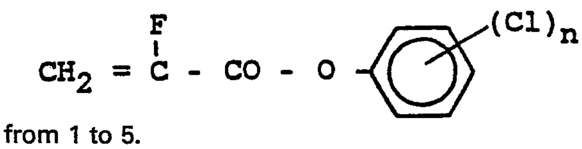

(I)

in which n is an integer from 1 to 5.

5. The use of the polymer as claimed in claim 1 for the preparation of light-transmitting fibers.

6. The use of the polymer as claimed in claim 2 for the preparation of light-transmitting fibers.